# FASCICULE DE BREVET EUROPEEN

(11) **EP 1 118 418 B1**
(45) Date de publication et mention de la délivrance du brevet: **23.11.2005**
(21) Numéro de dépôt: 00403714.9
(22) Date de dépôt: 29.12.2000
(51) Int. Cl.: B23K 11/25

(54) **Procédé de supervision d'un processus de soudage par résistance**
Verfahren zum Überwachen einer Widerstandschweissung
Resistance welding monitoring method

(30) Priorité: 18.01.2000 FR 0000596
(43) Date de publication de la demande: 25.07.2001
(73) Titulaire: Peugeot Citroen Automobiles SA, 92200 Neuilly sur Seine (FR)
(72) Inventeur: Soigneux, Jacky, 92140 Clamart (FR); Rossard, Emmanuel, 78390 Bois d'arcy (FR)
(74) Mandataire: Thinat, Michel

(56) Documents cités:
- EP-A- 0 344 034
- EP-A- 0 350 013
- US-A- 5 393 950
- US-A- 5 440 092
- HODNETT M ET AL: "A strategy for the development and standardisation of measurement methods for high power/cavitating ultrasonic fields: review of high power field measurement techniques" ULTRASONICS: SONOCHEMISTRY,GB,BUTTERWORTH-HEINEMANN, vol. 4, no. 4, 1 octobre 1997 (1997-10-01), pages 273-288, XP004101694 ISSN: 1350-4177

## Description

La présente invention concerne un procédé de supervision d'un processus de soudage par résistance d'un empilement de pièces métalliques, enserrées entre deux électrodes, dans lequel on applique un effort de serrage aux électrodes par l'intermédiaire d'une pince et dans lequel on applique entre les deux électrodes une tension électrique permettant le passage d'un courant.

Plus précisément, l'invention concerne un procédé de ce type, qui comprend au moins les opérations consistant à mesurer au moins un paramètre d'effort représentatif de l'effort de serrage avant, pendant et après le passage du courant et à comparer à au moins un premier seuil une évolution croissante du paramètre d'effort mesuré pendant le passage du courant.

Un procédé répondant à cette définition générique est par exemple connu du document de brevet FR 2 631 866, qui préconise de surveiller et de comparer au premier seuil l'évolution de l'effort de serrage qui résulte de l'expansion volumique des pièces métalliques en cours de soudage.

En dépit de l'intérêt de cette technique connue, il est apparu que, dans certains cas, la soudure réalisée était de qualité médiocre bien que l'effort de serrage ait présenté une évolution croissante relativement importante.

Dans ce contexte, la présente invention a pour but de perfectionner la technique antérieure en proposant des critères de sélection additionnels qui augmentent la fiabilité globale du procédé.

A cette fin, le procédé de l'invention, par ailleurs conforme à la définition générique qu'en donne le préambule ci-dessus, est essentiellement caractérisé en ce qu'il comprend en outre une opération consistant à comparer à au moins un second seuil une évolution décroissante du paramètre d'effort mesuré pendant le passage de courant et à signaler une anomalie lorsque l'évolution décroissante dépasse, en amplitude, le second seuil.

Dans la forme la plus rigoureuse de mise en oeuvre du procédé de l'invention, on signale une anomalie lorsque le paramètre d'effort mesuré présente une évolution croissante et une évolution décroissante, c'est-à-dire dès que le graphe représentant le paramètre d'effort en fonction du temps cesse d'être monotone.

Par ailleurs, on applique de préférence la tension électrique pendant une durée minimale prédéterminée, on continue d'appliquer la tension électrique au-delà de cette durée minimale si le paramètre d'effort mesuré n'a pas atteint le premier seuil à la fin de cette durée minimale, et on signale une anomalie si, au bout d'une durée totale maximale prédéterminée d'application de la tension, le premier seuil n'a toujours pas été atteint.

En outre, le procédé de l'invention comprend avantageusement une étape supplémentaire consistant à mesurer une valeur maximale atteinte par le paramètre d'effort pendant le passage du courant, à mesurer une valeur instantanée du paramètre d'effort au bout d'une durée constante prédéterminée succédant à une interruption du courant mais concomittante à l'application de l'effort de serrage, à comparer à un intervalle prédéterminé la différence entre la valeur maximale et la valeur instantanée, et à signaler une anomalie si la différence est en dehors de l'intervalle prédéterminé.

Pour annuler ou au moins réduire l'effet de toutes éventuelles influences parasites, le paramètre d'effort est de préférence constitué par une contrainte à laquelle est soumis un bras de la pince, cette contrainte étant mesurée au moyen d'une jauge de contrainte optique prenant par exemple la forme d'un interféromètre de Fabry-Pérot.

Le procédé de l'invention peut en outre comprendre une opération consistant à surveiller un premier paramètre électrique représentatif d'une relation d'amplitude entre la tension et le courant, à comparer ce premier paramètre électrique, au moins pendant le passage du courant, à un premier gabarit inférieur et à un premier gabarit supérieur, et à signaler une anomalie lorsque le premier paramètre électrique est inférieur au premier gabarit inférieur ou supérieur au premier gabarit supérieur.

Dans un mode de réalisation simple de l'invention, les premiers gabarits inférieur et supérieur sont respectivement définis en dessous et au-dessus d'une courbe d'évolution normale, préalablement obtenue de façon expérimentale, du premier paramètre électrique.

Dans le cas où la tension est appliquée sous forme d'impulsions périodiques d'amplitude maximale constante, et où le courant se présente corrélativement sous forme d'impulsions d'amplitude crête à crête variable, le premier paramètre électrique peut être constitué par une grandeur variant en fonction de l'amplitude crête à crête des impulsions de courant, et par exemple par cette amplitude elle-même.

Le procédé de l'invention peut également comprendre une opération consistant à surveiller un second paramètre électrique représentatif d'une relation de phase entre les impulsions de tension et les impulsions de courant, à comparer ce second paramètre électrique, au moins pendant le passage du courant, à un second gabarit inférieur et à un second gabarit supérieur, et à signaler une anomalie lorsque le second paramètre électrique est inférieur au second gabarit inférieur ou supérieur au second gabarit supérieur.

Enfin, le procédé de l'invention peut comprendre une opération consistant à observer une image d'une indentation laissée par l'une au moins des électrodes dans l'empilement de pièces métalliques après passage du courant, à analyser au moins deux plages colorimétriques de cette image, et à signaler une anomalie lorsque les deux plages colorimétriques analysées présentent des barycentres respectifs éloignés l'un de l'autre d'une distance supérieure à une distance maximale prédéterminée.

Dans ce dernier cas, l'étape consistant à analyser au moins deux plages colorimétriques de l'image observée peut être réalisée en comparant chacune de ces plages à des plages correspondantes d'une image normale, préalablement obtenue de façon expérimentale.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue schématique partielle d'un dispositif permettant la mise en oeuvre du procédé de l'invention;
- La figure 2 est un diagramme théorique représentant schématiquement l'évolution normale, en fonction du temps, du paramètre d'effort représentatif de l'effort de serrage, avant, pendant et après le passage du courant;
- La figure 3 illustre, dans sa partie supérieure, un graphe obtenu de façon expérimentale, donnant l'évolution en fonction du temps du paramètre d'effort dans le cas d'une soudure de bonne qualité, et dans sa partie inférieure, un agrandissement d'une partie du graphe supérieur;
- La figure 4 illustre, dans sa partie supérieure, un graphe obtenu de façon expérimentale, donnant l'évolution en fonction du temps du paramètre d'effort dans un cas possible de soudure de mauvaise qualité, et dans sa partie inférieure, un agrandissement d'une partie du graphe supérieur;
- La figure 5 est un diagramme théorique représentant schématiquement l'évolution en fonction du temps de la résistance électrique que constitue l'empilement de pièces à souder, pendant et après le passage du courant;
- La figure 6 illustre un graphe obtenu de façon expérimentale, donnant l'évolution en fonction du temps du courant circulant entre les électrodes soumises à des impulsions périodiques de tension d'amplitude maximale constante;
- La figure 7 est un diagramme théorique représentant schématiquement, en fonction du temps, le déphasage entre des impulsions de tension et des impulsions de courant dans le cas d'application d'une tension périodique;
- La figure 8A est une image, obtenue de façon expérimentale, de l'indentation typiquement laissée, après passage du courant, par une électrode circulaire dans l'empilement de pièces métalliques, dans le cas d'une soudure de bonne qualité;
- La figure 8B est une image, obtenue de façon expérimentale, de l'indentation typiquement laissée, après passage du courant, par une électrode circulaire dans l'empilement de pièces métalliques, dans le cas d'une soudure de qualité moyenne; et
- La figure 8C est une image, obtenue de façon expérimentale, de l'indentation typiquement laissée, après passage du courant, par une électrode circulaire dans l'empilement de pièces métalliques, dans le cas d'une soudure de mauvaise qualité;

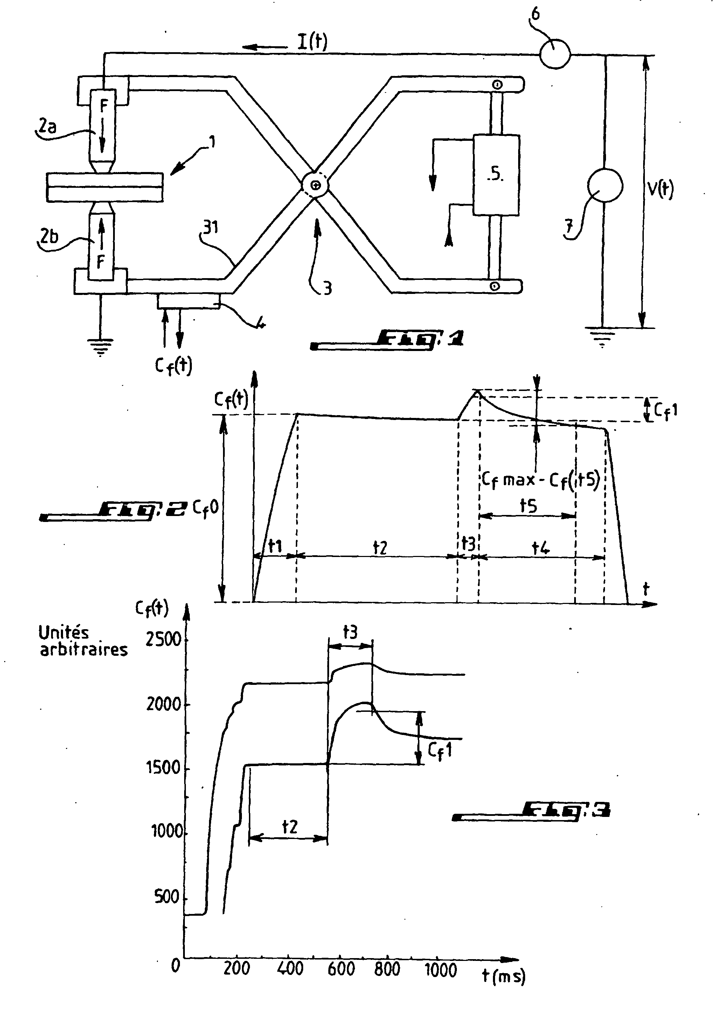

L'invention concerne un procédé de supervision d'un processus de soudage par résistance tel que schématiquement mis en oeuvre conformément à la figure 1.

Dans un tel processus de soudage, connu en soi et décrit dans le document de brevet FR 2 631 866 discuté dans le préambule, les pièces métalliques à souder entre elles forment un empilement 1 et sont enserrées entre deux électrodes 2a, 2b, auxquelles une pince 3, mue par un vérin 5, applique un effort de serrage F.

Une source de tension (non représentée), délivrant une tension V(t) variable en fonction du temps t et mesurable au moyen d'un voltmètre 7, est raccordée aux électrodes 2a, 2b.

L'application de la tension V(t), en général constituée par une série d'impulsions périodiques bipolaires d'amplitude maximale constante V0 (voir figure 7), engendre l'apparition d'un courant d'intensité I(t) variable en fonction du temps t et mesurable au moyen d'un ampèremètre 6, ce courant se présentant en général sous forme d'impulsions d'amplitude crête à crête I⁺-I⁻ variable, corrélées aux impulsions de tension (voir figure 6).

Le procédé de supervision de ce processus de soudage, que la présente invention vise à perfectionner, utilise de façon connue une indication sur l'évolution de l'effort de serrage F avant, pendant et après le passage du courant, pour faire une première évaluation de la qualité de la soudure réalisée.

Plus précisément, le procédé de l'invention prévoit notamment de mesurer avant, pendant et après le passage du courant, un paramètre d'effort Cf(t) représentatif de l'effort de serrage F, par exemple la contrainte à laquelle est soumis un bras 31 de la pince 3, et à comparer à un premier seuil Cf1 une évolution croissante de ce paramètre d'effort Cf(t) pendant le passage du courant.

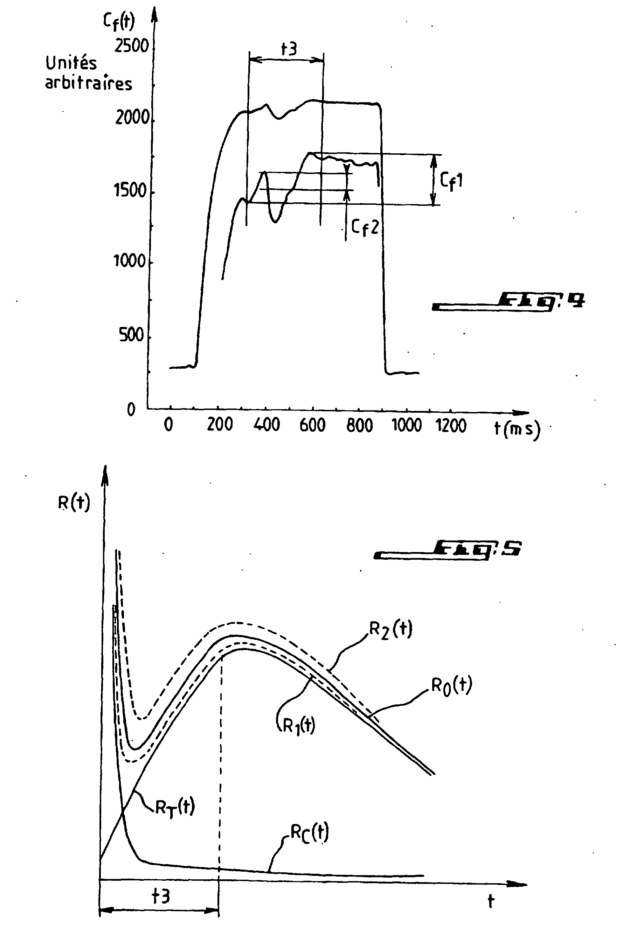

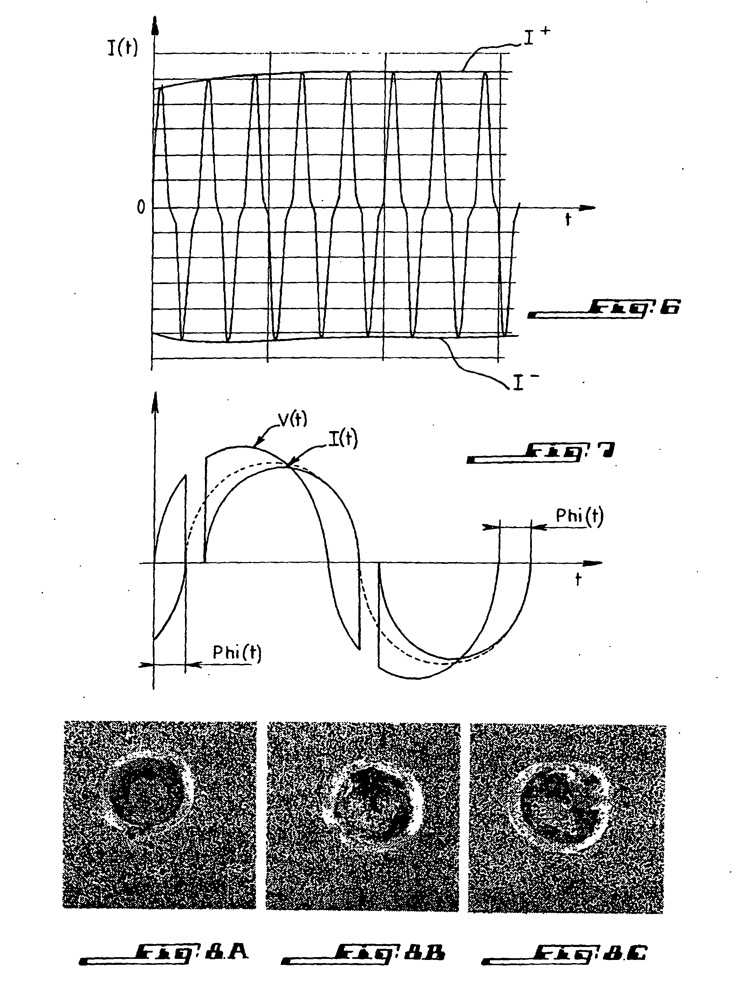

Ce paramètre d'effort Cf(t) évolue au cours des différentes phases du processus de soudage comme le montrent la figure 2, qui représente un cas théorique, et la figure 3 qui illustre le cas pratique d'une soudure de bonne qualité.

Pendant la période t1, qui est dite "phase d'accostage" et au cours de laquelle les électrodes sont déplacées jusqu'à enserrer fermement l'empilement 1 de pièces à souder, le paramètre Cf(t) évolue de façon croissante et rapide.

L'effort de serrage est appliqué avec une intensité calibrée de manière que le paramètre d'effort Cf(t) puisse atteindre ou dépasser un seuil d'accostage approprié Cf0.

On notera qu'un intervalle de temps plus ou moins long est prévu entre le début du déplacement des électrodes et l'envoi du courant de sorte que la période t1 est suivie d'une période t2 pendant laquelle le paramètre d'effort est constant, mais le courant n'est toujours pas envoyé dans les électrodes. Cet intervalle est déterminé de sorte que la durée t1 + t2 soit au moins égale au temps que mettrait le vérin le plus lent à appliquer un effort correspondant au seuil d'accostage CfO.

Dès que le temps t2 est écoulé, c'est-à-dire dès le début du temps t3, la tension V(t) est appliquée entre les électrodes 2a, 2b, le courant I(t) commençant alors à échauffer les pièces à souder par effet Joule.

Dans un mode de réalisation plus sophistiqué de l'invention, représenté à la figure 4, la valeur instantanée du paramètre d'effort Cf(t) est utilisée, dès qu'elle atteint le seuil d'accostage approprié Cf0, pour déclencher l'application de la tension V(t) entre les électrodes 2a, 2b, aucun temps d'attente n'étant donc véritablement prévu dans ce mode de réalisation.

La résistance électrique totale R0(t) que présente, dans le cas normal, l'empilement 1 de pièces à souder, ainsi que les composantes R_{C}(t) et R_{T}(t) de cette résistance totale, sont représentées sur la figure 5.

La composante R_{C}(t), représentative de la résistance due aux contacts mutuels imparfaits des pièces de l'empilement, diminue rapidement avec la température des pièces, donc diminue en fonction du temps qui s'écoule depuis l'instant de première application de la tension V(t), en raison du ramollissement que provoque cette élévation de température, et de l'amélioration des contacts galvaniques qui en résulte.

Au contraire, la composante R_{T}(t), représentative de la résistance intrinsèque du matériau constitutif des pièces à souder, qui dépend de la température, augmente avec la température des pièces, donc croît en fonction du temps qui s'écoule depuis l'instant de première application de la tension V(t), et ne décroît qu'après la fin de l'application de la tension.

Globalement, la résistance électrique totale R0(t) commence donc par décroître au début de la phase t3 d'application de la tension V(t).

La diminution de la résistance totale R0(t) provoque une augmentation du courant I(t), donc une dissipation accrue d'énergie électrique, aboutissant à une brusque élévation de température de l'empilement 1 de pièces à souder.

Corrélativement, cet empilement subit, pendant la phase t3 dite "d'expansion volumique", une brusque dilatation qui provoque une augmentation de l'effort F de serrage et donc aussi du paramètre d'effort Cf(t) (figure 2).

Une fois que le paramètre d'effort Cf(t) a dépassé un seuil minimal Cf1 au-dessus du seuil Cf0 correspondant à l'effort d'accostage, la tension V(t) peut être coupée.

Le refroidissement qui en résulte provoque, pendant la phase t4 suivante dite de "solidification", une rétraction qui entraîne à son tour une diminution de l'effort F de serrage et donc aussi du paramètre d'effort Cf (t) .

A la fin de la phase t4, c'est-à-dire après solidification complète de l'empilement de pièces soudées, l'effort de serrage peut être relâché pour permettre le déplacement des électrodes 2a, 2b vers un autre empilement de pièces à souder.

Selon sa caractéristique principale, le procédé de l'invention comprend au moins une opération supplémentaire qui consiste à comparer à un second seuil Cf2 une évolution décroissante du paramètre d'effort mesuré Cf(t) pendant le passage de courant et à signaler une anomalie lorsque l'évolution décroissante dépasse, en amplitude, le second seuil Cf2.

Ainsi, lorsque, pendant le passage de courant, le paramètre d'effort mesuré Cf(t) change de sens d'évolution et se met à décroître après avoir crû, le procédé de l'invention prévoit de comparer au second seuil Cf2 la décroissance de ce paramètre, et de signaler une anomalie lorsque cette décroissance dépasse en amplitude le second seuil Cf2, comme c'est le cas sur la figure 4.

Dans le cas d'un contrôle très rigoureux, le second seuil Cf2 peut être choisi comme étant égal à zéro, auquel cas une anomalie est signalée dès que le paramètre d'effort mesuré Cf(t) présente, pendant le passage de courant, une évolution décroissante faisant suite à une évolution croissante.

La tension électrique V(t) est de préférence appliquée pendant une durée minimale prédéterminée t30, mais continue d'être appliquée au-delà de cette durée minimale si, à la fin de celle-ci, le paramètre d'effort Cf(t) n'atteint pas le premier seuil Cf1.

Par ailleurs, si, au bout d'une durée totale maximale prédéterminée t31 d'application de la tension V(t), le premier seuil Cf1 n'a toujours pas été atteint, un signal d'anomalie est émis.

Il peut également être avantageux de prévoir une étape supplémentaire consistant à mesurer la valeur maximale Cfmax (figure 2) atteinte par le paramètre d'effort Cf(t) pendant le passage du courant, à mesurer la valeur instantanée Cf(t5) du paramètre d'effort Cf(t) au bout d'une durée constante t5 prise à compter de l'interruption du courant mais se terminant avant le relâchement de l'effort de serrage, à comparer la différence Cfmax-Cf(t5) à un intervalle prédéterminé, et à signaler une anomalie si cette différence est inférieure à la borne inférieure de cet intervalle, ou supérieure à la borne supérieure de ce dernier.

Il est apparu en effet que la différence ainsi déterminée était liée, pour chaque fabrication donnée, au diamètre du noyau de soudure par une fonction monotone, et qu'un diamètre insuffisant ou excessif de ce noyau était le signe d'une mauvaise qualité de soudure.

Pour réduire l'influence de tout parasite éventuel, la contrainte mécanique à laquelle est soumis le bras 31, et qui est prise comme paramètre d'effort, est de préférence mesurée au moyen d'un interféromètre de Fabry-Pérot, utilisé comme jauge de contrainte optique 4 (figure 1).

Le procédé de l'invention peut également comprendre la surveillance de la résistance électrique R(t), ou plus généralement d'un paramètre représentatif d'une relation d'amplitude entre la tension V(t) et le courant I(t), tel que la résistance ou l'admittance.

A cette fin, le procédé de l'invention inclut par exemple l'obtention et la mémorisation d'une courbe d'évolution normale de la résistance R0(t), obtenue de façon expérimentale, et la définition d'un gabarit inférieur R1(t) et d'un gabarit supérieur R2(t), encadrant la courbe d'évolution normale R0(t), et respectivement situés au-dessous et au-dessus de cette courbe R0(t) (figure 5).

Ces opérations ayant préalablement été effectuées, le procédé de l'invention comprend les opérations consistant à comparer la résistance électrique R(t), pendant le passage du courant I(t), au gabarit inférieur de résistance R1(t) et au gabarit supérieur de résistance R2(t), et à signaler une anomalie lorsque la résistance R(t) est inférieure au gabarit inférieur R1(t) ou supérieure au gabarit supérieur R2(t).

Dans le cas où la tension V(t) est appliquée sous forme d'impulsions périodiques d'amplitude maximale constante V0, le courant se présentant alors corrélativement sous forme d'impulsions d'amplitude crête à crête I⁺-I⁻ variable, la résistance électrique R(t) peut être assimilée à l'amplitude crête à crête I⁺-I⁻ des impulsions de courant (figure 6).

De même, dans le cas où la tension V(t) est appliquée sous forme d'impulsions périodiques, le procédé de l'invention peut en outre comprendre la surveillance du déphasage angulaire Phi(t) entre la tension V(t) et le courant I(t) (figure 7).

A cette fin, le procédé de l'invention inclut par exemple l'obtention et la mémorisation d'une courbe d'évolution normale du déphasage (non représentée), obtenue de façon expérimentale, et la définition d'un gabarit inférieur de phase Phi1(t) et d'un gabarit supérieur de phase Phi2(t) encadrant, respectivement au-dessous et au-dessus, la courbe d'évolution normale du déphasage.

Ces opérations ayant préalablement été effectuées, le procédé de l'invention comprend les opérations consistant à comparer le déphasage Phi(t), pendant le passage du courant, au gabarit inférieur de phase Phi1(t) et au gabarit supérieur de phase Phi2(t), et à signaler une anomalie lorsque le déphasage Phi(t) est inférieur au gabarit inférieur Phi1(t) ou supérieur au gabarit supérieur Phi2(t).

Enfin, le procédé de l'invention peut aussi comprendre une opération consistant à observer et analyser une image de l'indentation que laisse l'une au moins des électrodes dans l'empilement de pièces métalliques après passage du courant.

L'analyse peut porter sur plusieurs plages colorimétriques de cette image après numérisation, une anomalie étant signalée lorsque les plages colorimétriques analysées présentent des barycentres respectifs éloignés l'un de l'autre d'une distance supérieure à une distance maximale prédéterminée, c'est-à-dire lorsque la régularité de l'empreinte laissée par l'électrode est insuffisante, cette situation révélant une soudure dite "crachée", c'est-à-dire dont le noyau est déformé par une expulsion de matière pendant l'opération de soudage.

L'étape d'analyse des plages colorimétriques de l'image de l'indentation peut être conduite par la mise en oeuvre d'un algorithme de traitement d'image, ou peut plus simplement être réalisée en comparant chacune de ces plages à des plages correspondantes d'une image normale, préalablement obtenue de façon expérimentale.

## Revendications

1. Procédé de supervision d'un processus de soudage par résistance d'un empilement de pièces métalliques (1), enserrées entre deux électrodes (2a, 2b), dans lequel on applique un effort de serrage (F) aux électrodes par l'intermédiaire d'une pince (3) et dans lequel on applique entre les deux électrodes une tension électrique (V(t)) permettant le passage d'un courant (I(t)), ce procédé comprenant au moins les opérations consistant à mesurer au moins un paramètre d'effort (Cf(t)) représentatif de l'effort de serrage (F) avant, pendant et après le passage du courant et à comparer à au moins un premier seuil (Cf1) une évolution croissante du paramètre d'effort mesuré (Cf(t)) pendant le passage du courant, **caractérisé en ce qu'**il comprend en outre une opération consistant à comparer à au moins un second seuil (Cf2) une évolution décroissante du paramètre d'effort mesuré (Cf(t)) pendant le passage de courant et à signaler une anomalie lorsque l'évolution décroissante dépasse, en amplitude, le second seuil (Cf2).

2. Procédé de supervision suivant la revendication 1, **caractérisé en ce qu'**on signale une anomalie lorsque le paramètre d'effort mesuré (Cf(t)) présente une évolution croissante et une évolution décroissante.

3. Procédé suivant la revendication 1 ou 2, **caractérisé en ce qu'**on applique la tension électrique V(t) pendant une durée minimale prédéterminée (t30), **en ce qu'**on continue d'appliquer la tension électrique V(t) au delà de la durée minimale (t30) si le paramètre d'effort mesuré (Cf(t)) n'a pas atteint le premier seuil (Cf1) à la fin de la durée minimale (t30), et **en ce qu'**on signale une anomalie si, au bout d'une durée totale maximale prédéterminée (t31) d'application de la tension, le premier seuil (Cf1) n'a toujours pas été atteint.

4. Procédé suivant l'une quelconque des revendications précédentes, **caractérisé en ce qu'**il comprend une étape supplémentaire consistant à mesurer une valeur maximale (Cfmax) atteinte par le paramètre d'effort pendant le passage du courant, à mesurer une valeur instantanée (Cf(t5)) du paramètre d'effort au bout d'une durée constante prédéterminée (t5) succédant à une interruption du courant mais concomitante à l'application de l'effort de serrage, à comparer à un intervalle prédéterminé la différence entre la valeur maximale (Cfmax) et la valeur instantanée (Cf(t5)), et à signaler une anomalie si la différence est en dehors de l'intervalle prédéterminé.

5. Procédé de supervision suivant l'une quelconque des revendications précédentes, **caractérisé en ce que** le paramètre d'effort (Cf(t)) est constitué par une contrainte à laquelle est soumis un bras (31) de la pince (3), cette contrainte étant mesurée au moyen d'une jauge de contrainte optique (4).

6. Procédé de supervision suivant la revendication 5, **caractérisé en ce qu'**on utilise, en tant que jauge de contrainte optique (4), un interféromètre de Fabry-Pérot.

7. Procédé de supervision suivant l'une quelconque des revendications précédentes, **caractérisé en ce qu'**il comprend en outre une opération consistant à surveiller un premier paramètre électrique (R(t)) représentatif d'une relation d'amplitude entre la tension (V(t)) et le courant (I(t)), à comparer ce premier paramètre électrique (R(t)), au moins pendant le passage du courant (I(t)), à un premier gabarit inférieur (R1(t)) et à un premier gabarit supérieur (R2(t)), et à signaler une anomalie lorsque le premier paramètre électrique (R(t)) est inférieur au premier gabarit inférieur (R1(t)) ou supérieur au premier gabarit supérieur (R2(t)).

8. Procédé de supervision suivant la revendication 7, **caractérisé en ce que** les premiers gabarits inférieur et supérieur (R1(t), R2(t)) sont respectivement définis en dessous et au-dessus d'une courbe d'évolution normale (R0(t)), préalablement obtenue de façon expérimentale, du premier paramètre électrique.

9. Procédé de supervision suivant la revendication 7 ou 8, **caractérisé en ce que** la tension (V(t)) est appliquée sous forme d'impulsions périodiques d'amplitude maximale constante (V0), **en ce que** le courant se présente corrélativement sous forme d'impulsions d'amplitude crête à crête (I⁺-I⁻) variable, et **en ce que** le premier paramètre électrique (R(t)) est constitué par une grandeur variant en fonction de l'amplitude crête à crête (I⁺-I⁻) des impulsions de courant.

10. Procédé de supervision suivant la revendication 9, **caractérisé en ce qu'**il comprend en outre une opération consistant à surveiller un second paramètre électrique (Phi(t)) représentatif d'une relation de phase entre les impulsions de tension (V(t)) et les impulsions de courant (I(t)), à comparer ce second paramètre électrique (Phi(t)), au moins pendant le passage du courant, à un second gabarit inférieur (Phi1(t)) et à un second gabarit supérieur (Phi2(t)), et à signaler une anomalie lorsque le second paramètre électrique (Phi(t)) est inférieur au second gabarit inférieur (Phi1(t)) ou supérieur au second gabarit supérieur (Phi2(t)).

11. Procédé de supervision suivant l'une quelconque des revendications précédentes, **caractérisé en ce qu'**il comprend en outre une opération consistant à observer une image d'une indentation laissée par l'une au moins des électrodes dans l'empilement de pièces métalliques après passage du courant, à analyser au moins deux plages colorimétriques de cette image, et à signaler une anomalie lorsque les deux plages colorimétriques analysées présentent des barycentres respectifs éloignés l'un de l'autre d'une distance supérieure à une distance maximale prédéterminée.

12. Procédé de supervision suivant la revendication 11, **caractérisé en ce que** l'étape consistant à analyser au moins deux plages colorimétriques de l'image observée est réalisée en comparant chacune de ces plages à des plages correspondantes d'une image normale, préalablement obtenue de façon expérimentale.

## Patentansprüche

1. Verfahren zum Überwachen eines Widerstandsschweißprozesses einer Stapelung von Metallteilen (1), die zwischen zwei Elektroden (2a, 2b) eingespannt sind, wobei über eine Zange (3) eine Spannkraft (F) auf die Elektroden aufgebracht wird und zwischen den beiden Elektroden eine elektrische Spannung (V(t)) angelegt wird, die den Durchfluss eines Stroms (I(t)) gestattet, wobei dieses Verfahren zumindest die Vorgänge umfasst, die darin bestehen, zumindest einen Kraftparameter (Cf(t)), der repräsentativ ist für die Spannkraft (F), vor, während und nach dem Stromdurchfluss zu messen und einen steigenden Verlauf des gemessenen Kraftparameters (Cf(t)) mit zumindest einem ersten Schwellwert (Cf1) während des Stromdurchflusses zu vergleichen, **dadurch gekennzeichnet, dass** es ferner einen Vorgang umfasst, der darin beseht, einen abnehmenden Verlauf des gemessenen Kraftparameters (Cf(t)) während des Stromdurchflusses mit zumindest einem zweiten Schwellwert (Cf2) zu vergleichen und eine Anomalie dann zu melden, wenn der abnehmende Verlauf in der Amplitude den zweiten Schwellwert ((Cf2) übersteigt.

2. Überwachungsverfahren nach Anspruch 1, **dadurch gekennzeichnet, dass** eine Anomalie dann gemeldet wird, wenn der gemessene Kraftparameter (Cf(t)) einen steigenden Verlauf und einen abnehmenden Verlauf hat.

3. Verfahren nach Anspruch 1 oder 2, **dadurch gekennzeichnet, dass** die elektrische Spannung V(t) für eine vorbestimmte Mindestdauer (t30) angelegt wird, dass die elektrische Spannung V(t) weiter über die Mindestdauer (t30) hinaus dann angelegt wird, wenn der gemessene Kraftparameter (Cf(t)) den ersten Schwellwert (Cf1) bei Ablauf der Mindestdauer (t30) nicht erreicht hat, und dass eine Anomalie dann gerrieldet wird, wenn am Ende einer vorbestimmten Gesamthöchstdauer (t31) der angelegten Spannung der erste Schwellwert (Cf1) immer noch nicht erreicht wurde.

4. Verfahren nach einem der vorangehenden Ansprüche, **dadurch gekennzeichnet, dass** es einen zusätzlichen Schritt umfasst, der darin besteht, einen von dem Kraftparameter während des Stromdurchflusses erreichten Höchstwert (Cfmax) zu messen, einen momentanen Wert (Cf(t5)) des Kraftparameters am Ende einer vorbestimmten konstanten Dauer zu messen, die einer Stromunterbrechung folgt, jedoch gleichzeitig mit der Aufbringung der Spannkraft erfolgt, die Differenz zwischen Höchstwert (Cfmax) und momentanen Wert (Cf(t5)) mit einem vorbestimmten Intervall zu vergleichen und eine Anomalie dann zu melden, wenn die Differenz außerhalb eines vorbestimmten Intervalls liegt.

5. Überwachungsverfahren nach einem der vorangehenden Ansprüche, **dadurch gekennzeichnet, dass** der erste Kraftparameter (Cf(t)) aus einer Last besteht, welcher ein Schenkel (31) der Zange (3) unterliegt, wobei diese Last mittels eines Dehnungsmessstreifens (4) gemessen wird.

6. Überwachungsverfahren nach Anspruch 5, **dadurch gekennzeichnet, dass** als Dehnungsmessstreifen (4) ein Fabry-Perot-Interferometer verwendet wird.

7. Überwachungsverfahren nach einem der vorangehenden Ansprüche, **dadurch gekennzeichnet, dass** es ferner einen Vorgang umfasst, der darin besteht, einen ersten elektrischen Parameter (R(t)) zu überwachen, der repräsentativ ist für ein Amplitudenverhältnis zwischen Spannung (V(t)) und Strom (I(t)), diesen ersten elektrischen Parameter (R(t)) zumindest während des Stromdurchflusses (I(t)) mit einem ersten unteren Vergleichsmaß (R1(t)) und mit einem ersten oberen Vergleichsmaß (R2(t)) zu vergleichen, und eine Anomalie dann zu melden, wenn der erste elektrische Parameter (R(t)) unter dem ersten unteren Vergleichsmaß (R1(t)) oder über dem ersten oberen Vergleichsmaß (R2(t)) liegt.

8. Überwachungsverfahren nach Anspruch 7, **dadurch gekennzeichnet, dass** das erste untere und obere Vergleichsmaß (R1(t), R2(t)) jeweils unter bzw. über einer normalen Verlaufskurve (R0(t)) definiert ist, die zuvor auf empirische Weise vom ersten elektrischen Parameter erstellt wird.

9. Überwachungsverfahren nach Anspruch 7 oder 8, **dadurch gekennzeichnet, dass** die Spannung (V(t)) in Form von periodischen Impulsen mit konstanter Höchstamplitude (V0) angelegt wird, dass der Strom entsprechend in Form von Impulsen mit variabler Doppelamplitude (I⁺-I⁻) vorliegt und dass der erste elektrische Parameter (R(t)) aus einer Größe besteht, die je nach Doppelamplitude (I⁺-I⁻) der Stromimpulse variiert.

10. Überwachungsverfahren nach Anspruch 9, **dadurch gekennzeichnet, dass** es ferner einen Vorgang umfasst, der darin besteht, einen zweiten elektrischen Parameter (Phi(t)) zu überwachen, der repräsentativ ist für ein Phasenverhältnis zwischen Spannungsimpulsen (V(t)) und Stromimpulsen (I(t)), diesen zweiten elektrischen Parameter (Phi(t)) zumindest während des Stromdurchflusses (I(t)) mit einem zweiten unteren Vergleichsmaß (Phi1(t)) und mit einem zweiten oberen Vergleichsmaß (Phi2(t)) zu vergleichen und eine Anomalie dann zu melden, wenn der zweite elektrische Parameter (Phi(t)) unter dem zweiten unteren Vergleichsmaß (Phi1(t)) oder über dem zweiten oberen Vergleichsmaß (Phi2(t)) liegt.

11. Überwachungsverfahren nach einem der vorangehenden Ansprüche, **dadurch gekennzeichnet, dass** es ferner einen Vorgang umfasst, der darin besteht, ein Muster einer Ausbuchtung zu betrachten, die zumindest von einer der Elektroden in der Stapelung von Metallteilen nach Stromdurchfluss hinterlassen wird, zumindest zwei kolorimetrische Bereiche dieses Musters zu analysieren und eine Anomalie dann zu melden, wenn die beiden analysierten kolorimetrischen Bereiche jeweilige Schwerpunkte aufweisen, die über einen Abstand voneinander entfernt liegen, der größer ist als ein vorbestimmter Höchstabstand.

12. Überwachungsverfahren nach Anspruch 11, **dadurch gekennzeichnet, dass** der Schritt zum Analysieren zumindest zweier kolorimetrischer Bereiche des betrachteten Musters **dadurch** erfolgt, dass jeder dieser Bereiche mit entsprechenden Bereichen eines normalen Musters verglichen wird, das zuvor empirisch erhalten wird.

## Claims

1. Monitoring method for resistance welding a stack of metal parts (1), held between two electrodes (2a, 2b), in which a gripping force (F) is applied to the electrodes by means of a clamp (3) and in which an electric voltage (V(t)) is applied between the two electrodes, allowing a current (I(t)) to pass, this method comprising at least operations consisting of measuring at least one force parameter (Cf(t)) representative of the clamping force (F) before, during and after the current has passed and comparing an increasing development in the force parameter measured (Cf(t)) to at least a first threshold (Cf1) whilst the current is passing, **characterised by** the fact that it also comprises an operation consisting of comparing a decreasing development in the force parameter measured (Cf(t)) to at least a second threshold (Cf2) whilst the current is passing and signalling an anomaly when the decreasing development exceeds the second threshold (Cf2) in amplitude.

2. Monitoring method according to claim 1, **characterised by** the fact that an anomaly is signalled when the force parameter measured (Cf(t)) shows an increasing development and a decreasing development.

3. Method according to claim 1 or 2, **characterised by** the fact that the electric voltage V(t) is applied for a predetermined minimum duration (t30), the electric voltage V(t) continues to be applied beyond the minimum duration (t30) if the force parameter measured (Cf(t)) has not reached the first threshold (Cf1) at the end of the minimum duration (t30) and an anomaly is signalled if the first threshold (Cf1) has still not been reached at the end of a total predetermined maximum duration (t31) for applying the voltage.

4. Method according to any one of the previous claims, **characterised by** the fact that it comprises an additional stage consisting of measuring a maximum value (Cfmax) reached by the force parameter whilst the current is passing, measuring an instantaneous value (Cf(t5)) of the force parameter at the end of a predetermined constant duration (t5) following an interruption in the current but accompanying the application of the clamping force, comparing the difference between the maximum value (Cfmax) and the instantaneous value (Cf(t5)) with a predetermined interval and signalling an anomaly if the difference is outside the predetermined interval.

5. Monitoring method according to any one of the previous claims, **characterised by** the fact that the force parameter (Cf(t)) is made up of a strain to which an arm (31) of the clamp (3) is subject, this strain being measured by means of an optical strain gauge (4).

6. Monitoring method according to claim 5, **characterised by** the fact that a Fabry-Pérot interferometer is used as an optical strain gauge (4).

7. Monitoring method according to any one of the previous claims, **characterised by** the fact that it also comprises an operation consisting of monitoring a first electrical parameter (R(t)) representative of an amplitude relationship between the voltage (V(t)) and the current (I(t)), comparing this first electrical parameter (R(t)) with a first bottom template (R1(t)) and a first top template (R2(t))) at least whilst the current is passing (I(t)) and signalling an anomaly when the first electrical parameter (R(t)) is lower than the first bottom template (R1(t)) or higher than the first top template (R2(t)).

8. Monitoring method according to claim 7, **characterised by** the fact that the first top and bottom templates (R1(t)), R2(t)) are defined above and below a normal development curve (R0(t)) of the first electrical parameter respectively, which has been obtained previously in an experimental way.

9. Monitoring method according to claim 7 or 8, **characterised by** the fact that the voltage (V(t)) is applied in the form of periodic pulses of constant maximum amplitude (V0), the current is correlatively in the form of pulses with variable peak to peak amplitude (I⁺-I⁻) and the first electrical parameter (R(t)) is made up of a variable value according to the peak to peak amplitude (I⁺-I⁻) of the current pulses.

10. Monitoring method according to claim 9, **characterised by** the fact that it also comprises an operation consisting of monitoring a second electrical parameter (Phi(t)) representative of a phase relationship between the voltage pulses (V(t)) and the current pulses (I(t)), comparing this second electrical parameter (Phi(t)) with a second bottom template (Phi1(t)) and a second top template (Phi2(t)) at least whilst the current is passing and signalling an anomaly when the second electric parameter (Phi(t)) is lower than the second bottom template (Phi1(t)) or higher than the second top template (Phi2(t)).

11. Monitoring method according to any one of the previous claims, **characterised by** the fact that it also comprises an operation consisting of observing an image of an indentation left by at least one of the electrodes in the stack of metal parts after the current has passed, analysing at least two colorimetric ranges of this image and signalling an anomaly when the two colorimetric ranges analysed have their respective barycentres further away from each other by a distance which is greater than a predetermined maximum distance.

12. Monitoring method according to claim 11, **characterised by** the fact that the stage consisting of analysing at least two colorimetric ranges of the image observed is made by comparing each of these ranges with the corresponding ranges of a normal image, which has been obtained previously in an experimental way.
